(19) Europäisches Patentamt

European Patent Office

Office européen des brevets

(11) **EP 1 088 038 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **99923504.7**

(22) Anmeldetag: **30.04.1999**

(51) Int Cl.⁷: **C09D 5/44**

(86) Internationale Anmeldenummer:
**PCT/EP1999/002947**

(87) Internationale Veröffentlichungsnummer:
**WO 1999/058616 (18.11.1999 Gazette 1999/46)**

(54) **ELEKTROTAUCHLACKBÄDER MIT ZUSÄTZEN, DIE DIE BILDUNG VON KRATERN IM EINGEBRANNTEN LACKFILM VERHINDERN**

ELECTRO-DIPCOATING BATHS WITH ADDITIVES PREVENTING THE FORMATION OF CRATERS IN THE BAKED COATING

BAINS DE TREMPAGE ELECTRO-PHORETIQUE AVEC DES ADDITIFS EMPECHANT LA FORMATION DE CRATERES DANS LA PELLICULE DE VERNIS

(84) Benannte Vertragsstaaten:
**DE ES FR GB IT**

(30) Priorität: **08.05.1998 AT 77598**

(43) Veröffentlichungstag der Anmeldung:
**04.04.2001 Patentblatt 2001/14**

(73) Patentinhaber: **DuPont Performance Coatings GmbH & Co. KG**
**42285 Wuppertal (DE)**

(72) Erfinder:
• **HÖNIG, Helmut**
**A-8062 Komberg (AT)**
• **PAMPOUCHIDIS, Georg**
**A-8010 Graz (AT)**
• **HOBISCH, Gerald**
**A-8042 Graz (AT)**

(56) Entgegenhaltungen:
EP-A- 0 785 034    US-A- 5 089 101
US-A- 5 639 361    US-A- 5 739 185

• DATABASE WPI Section Ch, Week 9833 Derwent Publications Ltd., London, GB; Class A14, AN 98-379801 XP002900576 & JP 10 110124 A (NIPPON PAINT CO LTD), 28. April 1998 (1998-04-28)

## Beschreibung

Die Erfindung betrifft Zusatzstoffe zu Elektrotauchlackbädern, die die Bildung von Oberflächen-Unregelmäßigkeiten (Kratern) im eingebrannten Lackfilm verhindern.

Bei der Herstellung von Automobilen werden bekanntermaßen aus Blechcoils durch Stanzen und Verformen, Nieten und Schweißen Karosserieteile bzw. ganze Karossen hergestellt. Üblicherweise werden die Bleche oder Blechteile geölt oder beispielsweise mit Ziehfetten, Gleitmitteln, Schneidölen ausgerüstet, um einen reibungslosen Ablauf des Transports zu gewährleisten, die Stanzen und Pressen zu schonen usw. Eine Reinigung und Entfettung der Rohkarossen erfolgt erst in der Vorbehandlungszone, danach werden die Rohkarossen phosphatiert, und die erste Lackschicht wird üblicherweise durch das Verfahren der kathodischen Elektrotauchlackierung aufgebracht.

Während des Einbrennens dieser ersten Lackschicht in den Einbrennöfen (Trockner) erhitzen sich die Ziehfette und Öle, die in den Falzen und Bördelungen eingeschlossen sind und spritzen durch den sich entwickelnden Druck heraus. Durch den Umluftstrom in den Einbrennöfen werden die Öl- und Fetttröpfchen auf der noch nicht vernetzten ersten Lackschicht verteilt und erzeugen Oberflächen-Unregelmäßigkeiten, sog. Krater.

Aufgabe der Erfindung war es nun, eine oberflächenaktive Substanz ("Antikratermittel") zu entwickeln, welche die Ausbildung von Kratern verhindert und keinerlei nachteilige Wirkungen auf die Nachfolgeschichten ausübt Diese Substanzen müssen mit dem wäßrigen Lacksystem unverträglich sein, eine geringe Oberflächenspannung aufweisen, sich gut auf der (unvernetzten) Lackoberfläche ausbreiten, leicht applizierbar sein, und sie dürfen in der eingesetzten Konzentration die Lackeigenschaften nichtnachteilig verändern. Nachteilige Auswirkungen auf Nachfolgeschichten sind Haftungsprobleme der nachfolgend aufgebrachten B eschichtungen z. B. mit Kunststoffen wie PVC, mit Klebern, Füller-Schichten, und Reparaturlacken. Werden beispielsweise Silikonöle dem Tauchlackbad zugesetzt, so wird zwar die Kraterbildung vermindert, die Haftung der folgenden Lackschichten wird jedoch soweit verschlechtert, daß keine befriedigenden Lackierung möglich ist. Auch wurde der Zusatz von bestimmten Harzen zu der Badflüssigkeit empfohlen: in der Patentanmeldung JP-A 61- 115 974 wird ein Epoxid-Amin-Addukt aus einem mit dimeren Fettsäuren modifizierten Epoxyharz und einem Polyoxyalkylen-Polyamin beschrieben. Dadurch läßt sich zwar die Neigung zur Kraterbildung verringern, die Haftung der Folgeschichten wird jedoch verschlechtert. Einweiteres Beispiel für Epoxid-Amin-Addukte als Antikrater-Mittel findet sich in der EP-A 0 070 550: das Addukt aus einem Epoxyharz und einem primäre Aminogruppen enthaltenden Polyoxyalkylen-Polyamin verringert zwar die Neigung zur Kraterbildung, wirkt sich aber ebenfalls nachteilig auf die Haftung der folgenden Lackschichten aus.

Es ist auch beschrieben, Homo- oder Copolymere von bestimmten Alkylvinyläthern dem Tauchbad zuzusetzen. Dabei werden die Massengehalte dieser Polymeren in der Badflüssigkeit zwischen 10 und 10 000 ppm, bevorzugt 150 bis 500 gehalten. Es wurde beobachtet, daß beim Unterschreiten des bevorzugten Bereichs für den Gehalt an Polyalkylvinyläther Krater in erheblicher Anzahl entstehen, auch ohne daß Öle oder Fette in der Badflüssigkeit sind. Beim Überschreiten des bevorzugten Bereichs tritt Exudation auf, wobei die Oberfläche des Lackfilms von einem schmierigen Belag überzogen wird. Auch dies stört die Haftung der Nachfolgeschichten. Es ist also wichtig, den Gehalt an diesem Polymeren in dem bevorzugten Bereich zu halten. Wegen der niedrigen Einsatzmenge und der Schwierigkeit der einfachen und raschen Bestimmung des Anteils dieser Polymeren in der Badflüssigkeit bestand das Bedürfnis, eine Zusatz zur Unterdrückung von Kratern zu finden, der einen breiteren Anwendungsbereich bezüglich seiner Konzentration im Bad hat, und der auf einfache Weise eine Konzentrationsbestimmung in der Badflüssigkeit ermöglicht.

Aus US 5,089,101 sind kationische elektroabscheidbare Lacke bekannt, die ein Neutralisationsprodukt oder ein quaternisiertes Ammoniumsalz eines Copolymeren, welches kationische Methacrylmonomere in einem Mengenanteil von 1-50 Gew.-% enthält, enthalten. Die Copolymeren eignen sich als Pigmentdispergierharz in bewitterungsstabilen kationischen elektroabscheidbaren Lacken. Aus US 5,739,185 und EP-A-0 785 034 sind kationische elektroabscheidbare Lackzusammensetzungen bekannt, die neben einem polyurethanmodifizierten Epoxyharzaminaddukt ein nichtionisches filmbildenes Harz enthalten. Das nichtionische filmbildende Harz kann ein Acrylatharz sein. Unter verschiedenen als Hauptmonomer für die Herstellung eines solchen nichtionischen Acrylatharzes als geeignet genannten Monomeren wird auch 2-Äthylexyl(meth)acrylat genannt. JP10110124 A beschreibt kationische. elektroabscheidbare Lacke, die amino- und hydroxylfunktionelle Acrylmonomere enthaltende Acrycopolymere enthalten.

Weder US 5,089,101 noch US 5,739,185, EP-A-0 785 034 oder JP10110124 A beschreiben kathodisch abscheidbare Elektrotauchlacke, die, bezogen auf ihren Festharzgehalt 0,5 bis 5 % Homopolymere von 2-Äthylhexylacrylat oder Copolymere aus mindestens 65 % 2-Äthylhexylacrylat sowie aus maximal 35% Comonomeren ausgewählt aus linearen, cyclischen oder verzweigten Alkylacrylaten mit 1 bis 18 Kohlenstoffatomen im Alkylrest und linearen, cyclischen oder verzweigten Hydroxyalkylacrylaten mit 2 bis 6 Kohlenstoffatomen im Hydroxyalkylrest enthalten. Sie legen die Verwendung der 2-Äthylhexylacrylathomo- oder -copolymeren als kraterverhindernde und zugleich keinerlei nachteilige Wirkungen auf die Nachfolgeschichten ausübende Substanzen in kathodisch abscheidbaren Elektrotauchlacken auch nicht nahe.

Es wurde nun gefunden, daß mit Vorteil ein Homopolymerisat aus 2-Äthylhexylacrylat als Antikratermittel eingesetzt werden kann. Besonders geeignet sind solche Homopolymerisate von 2-Äthylhexylacrylat, die bei der Messung der Viskosität von verdünnten Lösungen der Polymeren in Chloroform als Lösungsmittel einen Wert für den Staudinger-Index $J_g$ (Grenzwert der konzentrationsbezogenen relativen Viskositätsänderung $J_v$ bei abnehmender Konzentration und Schubspannung) von 1,5 cm$^3$/g bis 12 cm$^3$/g aufweisen.

Aus den Meßwerten für die dynamische Viskosität $\eta$ der Lösung und $\eta_s$ des Lösungsmittels ergibt sich die relative Viskositätsänderung oder -erhöhung $\eta_r$- 1 gemäß

$$\eta_r - 1 = \frac{\eta - \eta_s}{\eta_s}.$$

Daraus berechnet man die konzentrationsbezogene relative Viskositätsänderung $J_v$ (Staudinger-Funktion) gemäß

$$J_v = \frac{1}{\beta_i} \cdot \frac{\eta - \eta_s}{\eta_s},$$

wobei $\beta_i$ die Massenkonzentration des gelösten Stoffes (Masse $m_i$ des Stoffes geteilt durch Volumen $V$ der Lösung) ist. Als Grenzwert ergibt sich aus dem oben gesagten der Staudinger-Index $J_g$ als

$$J_g = \lim \frac{1}{\beta_i} \cdot \frac{\eta - \eta_s}{\eta_s}.$$

$$\beta_i \to 0$$

Das erfindungsgemäße Homopolymerisat soll vorzugsweise einen Staudinger-Indexvon 1,5 bis 12, besonders vorteilhaft 3.5 bis 7 cm$^3$/g aufweisen.

Auch Copolymere des 2-Äthylhexylacrylats, mit Comonomeren ausgewählt aus Alkylacrylaten mit 1 bis 18, besonders bevorzugt 1 bis 6, Kohlenstoffatomen im Alkylrest sowie Hydroxyalkylacrylaten mit 2 bis 6, besonders bevorzugt 2 bis 4, Kohlenstoffatomen im Hydroxyalkylrest sind erfindungsgemäß einsetzbar, soweit der Massenanteil der Comonomeren in der Monomermischung 35 %, bevorzugt 25 %, nicht überschreitet. Dabei lassen sich auch Mischungen der genannten Comonomeren einsetzen, wobei die Beschränkung des Massenanteils dann für die Summe der Massen der eingesetzten Comonomeren gilt. Die Alkyl- bzw- Hydroxyalkylreste der bevorzugt eingesetzten Comonomeren können linear, verzweigt oder cyclisch sein.

Die erfindungsgemäßen Homo- und Copolymere des 2-Äthylhexylacrylats werden durch Lösungs- oder Substanz-Polymerisation hergestellt und sind daher frei von Emulgatoren. Sie sind in den üblichen Lösungsmitteln wie z. B. Chloroform, Tetrahydrofuran, Toluol, Aceton ohne Rückstand zu lösen.

Das Homo- oder Copolymer des 2-Äthylhexylacrylats ist in Wasser unlöslich und alleine nicht mit Wasser vermischbar und nicht in Wasser emulgierbar, es kann bei der Herstellung des Bindemittels für den kathodisch applizierbaren Elektrotauchlack diesem Bindemittel vor dem Verdünnungsvorgang mit Wasser zugemischt werden und auf diese Weise in die wäßrige Phase transportiert werden. Das Homo- oder Copolymer des 2-Äthylhexylacrylats kann jedoch auch mit emulgierenden wassermischbaren Bindemitteln, z.B. Pastenharzen, Epoxidaminaddukten oder Netzmitteln vermischt werden und in dieser Form dem wäßrigen Elektrotauchlack zugemischt werden.

Bevorzugt wird das Homo- oder Copolymer des 2-Äthylhexylacrylats in einer solchen Menge eingesetzt, daß sein Massenanteil, bezogen auf die Masse des Festharzes in dem KTL-Bindemittel, ca. 0,5 bis 5 % vorzugsweise 0,9 bis 1,8 %, beträgt. Unter Festharz wird hier der im Bindemittel enthaltene Harzanteil ohne andere Feststoffe wie z.B. Katalysator-Reste, Pigmente, (Fließ-)Additive und Füllstoffe verstanden.

Die kathodisch abscheidbaren Kunstharze, die als wesentlicher Bestandteil in den Elektrotauchlackbädem enthalten sind, sind bevorzugt die üblichen Epoxid-Amin-Addukte. Sie werden bevorzugt mit blockierten Isocyanaten gemeinsam eingesetzt. Beim Einbrennen (Erhitzen) der Bleche mit der abgeschiedenen Lackschicht spalten diese Isocyanate das Blockierungsmittel ab, wenn die Einbrenntemperatur die Zersetzungstemperatur des Adduktes aus Isocyanat und Blockierungsmittel erreicht oder überschreitet. Das freie Isocyanat reagiert nun mit den Hydroxyl- oder Aminogruppen des Epoxid-Amin-Adduktes und vernetzt diese Lackschicht.

Zur Herstellung der Epoxid-Amin-Addukte werden Polyepoxide mit mindestens zwei Epoxidgruppen pro Molekül mit primären oder sekundären Aminen oder deren Gemischen oder ihren Salzen oder deren Gemischen in bekannter Weise umgesetzt.

In den nachfolgenden Beispielen bedeuten ebenso wie im vorhergehenden Text alle Angaben mit der Einheit "%" Massenanteile, soweit nicht anders angegeben. "Teile" (abgekürzt "Tle.") sind stets Massenteile. Konzentrationsangaben in "%" sind Massenanteile des gelösten Stoffes in der Lösung. Der spezifische Epoxidgruppengehalt *SEG* einer Probe **B** ist definiert als Quotient der Stoffmenge an Epoxidgruppen $n$(EP) in der Masse $m_B$ der betreffenden Substanz (Kehrwert des sog. "EV-Wertes" oder "Epoxidäquivalentgewichts"):

$$SEG = n(EP) / m_B$$

eine übliche Einheit ist z. B. mmol/kg.

Die Säurezahl ist gemäß DIN 53 402 definiert als der Quotient derjenigen Masse $m_{KOH}$ an Kaliumhydroxid, die erforderlich ist, um eine zu untersuchende Probe zu neutralisieren, und der Masse $m_B$ dieser Probe (Masse des Feststoffes in der Probe bei Lösungen oder Dispersionen); ihre übliche Einheit ist "mg/g". Die Aminzahl ist gemäß DIN 53 176 definiert als der Quotient derjenigen Masse $m_{KOH}$ an Kaliumhydroxid, die genausoviel Säure zur Neutralisation verbraucht wie eine zu untersuchende Probe, und der Masse $m_B$ dieser Probe (Masse des Feststoffes in der Probe bei Lösungen oder Dispersionen); ihre übliche Einheit ist "mg/g".

**Beispiel 1    Bindemittel für Pigmentpaste**

**a) Herstellung eines mit Polypropylenglykol modifizierten Epoxidharz-Zwischenproduktes**

In ein geeignetes Reaktionsgefäß, ausgestattet mit Rührer, Thermometer und Destillationsvorrichtung, wurden 258 Tle. 2-Äthylhexylamin (2 mol) vorgelegt und auf 80 °C erwärmt. Bei 80 °C wurden 380 Tle. eines aliphatischen Epoxidharzes (Basis Polypropylenglykol, Epoxidäquivalentgewicht ca. 190 g/mol; SEG ca. 5260 mmol/kg) gleichmäßig innerhalb einer Stunde zugegeben, dabei stieg die Temperatur auf 120 °C. Bei 120 °C wurde der Ansatz eine Stunde nachreagiert. Anschließend wurden 1175 Tle. Monoäthylenglykolmonobutyläther und bei 70 °C 1900 Tle. eines Epoxidharzes auf Bisphenol A-Basis (Epoxidäquivalentgewicht ca. 475 g/mol, SEG ca. 2100 mmol/kg) zugegeben und der Ansatz auf 120 °C erwärmt und bei dieser Temperatur 1 ½ Stunden reagiert. Das Zwischenprodukt wies einen Massenanteil an Polyoxyalkylenstruktureinheiten von 11 % und einen Massenanteil an Alkylresten mit mehr als 3 C-Atomen von 9 % auf.

**b) Herstellung des Pastenharzes**

Zu dem nach a) erhaltenen Zwischenprodukt wurden bei 100 °C 204 Tle. 3-Dimethylamino-1-propylamin (2 mol) zugegeben und 1 Stunde bei 100°C reagiert. Nach Zugabe von 314 Tlen. Monoäthylenglykolmonobutyläther und 66 Tlen. Paraformaldehyd, 91 %ig, (2 mol), wurden bei ca. 140 °C unter azeotroper Destillation mit Methylisobutylketon als Schleppmittel ca. 36 Tle. Reaktionswasser abdestilliert. Danach wurde das Methylisobutylketon unter Vakuum entfernt und die Masse mit 774 Tlen. Monoäthylenglykolmonobutyläther auf einen Festkörper-Massenanteil von 55 % verdünnt.

**Beispiel 2**

**Herstellung und Prüfung einer Pigmentpaste aus dem Produkt gemäß Beispiel 1**

Das gemäß Beispiel 1 hergestellte Harz wurde unter Zugabe von 100 mmol Essigsäure je 100 g des Festharzes neutralisiert und mit deionisiertem Wasser auf einen Festkörper-Massenanteilvon 14 % verdünnt.

Auf einer Laborsandmühle wurde nach dem folgenden Ansatz eine Pigmentpaste hergestellt:

| | |
|---|---|
| 1428,5 Tle. | Bindemittel 14 %ig |
| 30 Tle. | Farbruß |
| 225 Tle. | Aluminiumsilikatpigment |
| 840 Tle. | Titandioxid |
| 105 Tle. | Bleisilikatpigment |
| 2628,5 Tle. | Pigmentpaste 53,3 %ig |

**Beispiel 3**

**Herstellung der Bindemitteldispersion**

Das Bindemittel für die im Elektrotauchlack eingesetzte Bindemitteldispersion wurde auf der Basis von modifizierten Epoxidharzen analog Beispiel 1 des österreichischen Patents AT-B 353 369 hergestellt:

**3.1 Herstellung des Bindemittels**

**A) Herstellung der Komponente A**

In einem mit Rührer, Thermometer, Tropftrichter und Rückflußkühler ausgestatteten Reaktionsgefäß wurden 1000 g eines Epoxidharzes auf Bisphenol A-Basis (Epoxidäquivalentgewicht ca. 500 g/mol; SEG ca. 2000 mmol/kg) in 500 g Methylisobutylketon (MIBK) bei 60 bis 70 °C gelöst und anschließend 0,2 g Hydrochinon und 168 g Methacrylsäure zugegeben. Die Temperatur wurde auf 100 bis 120 °C gesteigert und die Reaktion bei dieser Temperatur bis zu einer Säurezahl von unter 3 mg/g geführt. Anschließend wurde das Reaktionsprodukt bei 60 bis 70 °C mit 650 g BMI (70%ige Lösung in MIBK eines basischen Monoisocyanates, hergestellt aus 1 mol Toluylendiisocyanat und 0,9 mol Dimethyläthanolamin, molare Masse = 254 g/mol) versetzt und solange reagiert, bis praktisch kein Isocyanat mehr nachzuweisen war.

**B) Herstellung der Komponente B**

In einem mitRührer, Thermometer, Tropftrichter und Rückflußkühler ausgestatteten Reaktionsgefäß wurden 400 g eines Epoxidharzes auf Bisphenol A-Basis (Epoxidäquivalentgewicht ca. 200 g/mol; SEG ca. 5000 mmol/kg) in 172 g MIBK gelöst und bei 60 bis 70 °C 210 g Diäthanolamin (2 mol) zugegeben. Nach beendeter Wärmeentwicklung wurde noch eine Stunde bei ca. 130 °C (Rückflußtemperatur) reagiert. In weiterer Folge wurde das Reaktionsprodukt bei 70 bis 80 °C mit 830 g UMI (70%ige Lösung in MIBK eines ungesättigten Monoisocyanates, hergestellt aus 1 mol Toluylendiisocyanat und 1 mol Hydroxyäthylmethacrylat, molare Masse = 304 g/mol) solange reagiert, bis praktisch kein Isocyanat mehr nachzuweisen war.

**3.2 Herstellung der Dispersion und Zusatz des erfindungsgemäßen Antikratermittels**

Die Komponenten A und B wurden bei 70 °C in einem Massenverhältnis von 80 zu 20, und Zusatz des Antikratermittels von 0,5 - 2,0 g pro 100 g des Festharzes gründlich vermischt und mit 30 mmol Ameisensäure pro 100 g des Festharzes neutralisiert. Es wurden die Dispersionen 3.2 a bis 3.2 e hergestellt, die Zusätze von 0; 0,5; 1,0; 1,5 und 2,0 g eines Homopolymers von 2-Äthylhexylacrylat (J = 5,2 cm$^3$/g) je 100 g Festharz enthielten. Unter vermindertem Druck bei 80 °C wurde das Lösungsmittel MIBK größtenteils abdestilliert. In weiterer Folge wurde das Produkt unter kräftigem Rühren und bei fallender Temperatur mit deionisiertem Wasser auf ca. 45 % verdünnt. Bei dieser Konzentration wurde 2 Stunden unter Kühlung kräftig dispergiert und anschließend der Festkörper-Massenanteil bestimmt. Abschließend wurde das Produkt mit deionisiertem Wasser weiter auf 35 % verdünnt.

**Beispiel 4**

**Herstellung einer Elektrotauchlackzusammensetzung**

Gemäß der folgenden Formulierung wurde ein Badmaterial für die Elektrotauchlackierung hergestellt:

| | |
|---|---|
| 1600 Tle. | Bindemitteldispersion gemäß Beispiel 3(3.2 a bis 3.2 e), 35 %ig |
| 2872,5 Tle. | deionisiertes Wasser |
| 527,5 Tle. | Pigmentpaste, 53,3 %ig gemäß Beispiel 2 |
| 5000 Tle. | Lack |

Die Lacke wiesen einen Festkörper-Massenanteil von 16,8 % und einen pH-Wert von 6,0 bis 6,2 auf. Mit den Lacken wurden zinkphosphatierte Stahlbleche unter folgenden Badbedingungen beschichtet, um Schichtstärken von ca. 23 bis 25 µm zu erhalten:

| Badtemperatur | 28 bis 30°C |
|---|---|
| Beschichtungsspannung | 300 V |
| Beschichtungszeit | 2 Minuten |

Auf die abgeschiedenen, noch nicht eingebrannten Lackschichten wurden mit Hilfe eines Pinsels Ziehöle (®Anticorit RP 41078, ®Tizinol VZ 386, ®Tizinol VZ 292) aufgespritzt. Danach wurden die Bleche 15 Minuten bei 180 °C eingebrannt.

Ergebnis:

Die Bleche ohne erfindungsgemäße Antikratermittel (3.2 a) zeigten starke kraterartige Vertiefungen, die bis zur Metalloberfläche reichen.
Die Bleche mit erfindungsgemäßen Antikratermitteln (3.2 b bis 3.2 e) zeigten lediglich auf der Lackfilmoberfläche Restspuren der Öltropfen, es waren jedoch keine Vertiefungen im Lackfilm zu sehen.

**Beispiel 5**

**Herstellung des Pigmentpastenharzes gemäß AT-B 394 372, Beispiel 3**

In einem Reaktionsgefäß wurden bei 80 °C zu 533 Tlen. Äthylenglykolmonobutyläther ("BUGL") 640 Tle. eines aliphatischen Epoxidharzes (Basis Polypropylenglykol, EV-Wert ca. 320 g/mol; SEG ca. 3125 mmol/kg), 800 Tle. Epoxidharz auf Bisphenol A-Basis (EV-Wert ca. 200 g/mol; SEG ca. 5000 mmol/kg), 456 Tle. (2 mol) Bisphenol A und 3 Tle. Triäthylamin zugegeben. Die Masse wurde auf 130 °C erwärmt und 2 Stunden gerührt. Das Produkt wies einen Massenanteil an Polyoxyalkylen-Einheiten von 28 % auf
Zu diesem Zwischenprodukt wurden bei 180 °C 204 Tle. 3-Dimethylamino-1-propylamin (2 mol) zugegeben. Nach einer Stunde bei 100 °C wurden dem Ansatz 66 Tle. Paraformaldehyd, 91 %ig (2 mol) zugegeben und bei ca. 140°C unter azeotroper Destillation mit Methylisobutylketon als Schleppmittel ca. 36 Tle. Reaktionswasser entfernt. Danach wird das Methylisobutylketon unter vermindertem Druck abgezogen, die Masse bei ca. 80 °C mit 192 Tlen. 30 %iger Essigsäure (36 mmol pro 100 g des Festharzes) neutralisiert und mit 1880 Tlen. voll entsalzten Wassers ("VEW") auf einen Festkörper-Massenanteil von ca. 45 % verdünnt.

**Beispiel 6**

**6.1 Herstellung des in den Lacken eingesetzten Bindemittels gemäß EP-A 0 209 857, Beispiel 1**

In einem geeigneten Reaktionsgefäß wurden 220 Tle. Nonylphenol (1 mol) mit 130 Tlen. Diäthylaminopropylamin (1 mol) und 100 Tlen. Toluol auf 75 °C erwärmt und dem Ansatz anschließend unter leichtem Kühlen 33 Tle. Paraformaldehyd, 91 %ig (1 mol) zugegeben. Die Temperatur wurde langsam gesteigert, bis sich eine zügige azeotrope Destillation einstellte. Nach Abtrennen von 21 Tlen. Reaktionswasser wird das Toluol unter vermindertem Druck abdestilliert und das Produkt in 167 Tlen. Diäthylenglykoldimethyläther gelöst.
Die so erhaltene Lösung wurde bei 30 bis 40 °C unter Kühlung mit 304 Tlen. (1,0 mol) eines mit 2-Äthylhexanol halbblockierten Toluylendiisocyanats versetzt und die Temperatur von 40 °C ca. 1,5 Stunden gehalten, bis kein Isocyanat mehr nachweisbar war. Anschließend wurden 475 Tle. eines Epoxidharzes auf Basis von Bisphenol A (EV-Wert ca. 475 g/mol; SEG ca. 2100 mmol/kg) in 200 Tlen. Propylenglykolmonomethyläther gelöst und nach Zusatz von 835 Tlen. des oben hergestellten Vorproduktes bei 95 bis 100 °C solange miteinander reagiert, bis kein Epoxid mehr nachzuweisen war. Der Festkörper-Massenanteil betrug ca. 75 %.

**6.2 Herstellung der Bindemittel-Dispersion**

In einem geeigneten Behälter wurden 2300 Tle. VEW und 32 Tle. wäßrige Ameisensäure (5 mol/l) vorgelegt und unter Rühren 620 Tle. des Bindemittels aus Beispiel 6.1 zugesetzt. Der Festkörper-Massenanteil betrug ca. 15,8 %.

**Beispiel 7**

**Herstellung einer KTL-Dispersion**

a) 832 Tle. eines Monocarbonats eines Epoxidharzes auf der Basis von Bisphenol A (®Epikote 828) werden mit 830 Tlen. eines handelsüblichen Polycaprolactonpolyols (®CAPA 205) und 712 Tlen. Diäthylenglykoldimethyläther gemischt und bei 70 bis 140°C mit einem Massenanteil von ungefähr 0,3 % BF$_3$-Diäthyläther-Komplex zur Reaktion gebracht, bis kein Epoxid mehr nachzuweisen war. Zu diesem Produkt (Festkörper-Massenanteil 70 %, 2 mol Carbonat-Gruppen) wurden bei 40 bis 80 °C in Gegenwart eines Massenanteils von 0,3 % Zn-Acetylacetonat als Katalysator 307 Tle. eines Umsetzungsproduktes aus 174 Tlen. Toluylendiisocyanat (2 mol Isocyanatgruppen) mit 137 Tlen. 2-Äthylhexanol mit einem Massenanteil an Isocyanatgruppen von ca. 12,8 % unter Zusatz eines Massenanteils von 0,3 % Benzyltrimethylammoniumhydroxid (®Triton B) gegeben. Es wurde soweit umgesetzt, bis kein Isocyanat mehr nachzuweisen war, und dann mit Diäthylenglykoldimethyläther auf einen Festkörper-Massenanteil von ca. 70 % eingestellt.

b) Zu 1759 Tlen. eines Bicarbonats eines Epoxidharzes auf der Basis von Bisphenol A (®Epikote 1001) wurden bei 60 bis 80 °C 618 Tle. eines Umsetzungsproduktes aus 348 Tlen. Toluylendiisocyanat (80 % 2,4-Isomeres; 20 % 2,6-Isomeres) mit 274 Tlen. 2-Äthylhexanol mit einem restlichen Massenanteil an Isocyanatgruppen von ca. 12,8 % unter Zusatz eines Massenanteils von 0,3 % Benzyltrimethylammoniumhydroxid als Katalysator langsam zugegeben. Die Reaktion wurde fortgesetzt, bis kein Isocyanat mehr nachzuweisen war. Zu 860 Tlen. Bishexamethylentriamin in 2315 Tlen. Methoxypropanol gelöst wurden bei einer Temperatur von 20 bis 40 °C 622 Tle eines Umsetzungsprodukte aus 137 Tlen. 2-Äthylhexanol mit 174 Tlen. Toluylendiisocyanat (Isocyanatgruppen-Massenanteil ca. 12,8 %) unter Benzyltrimethylammoniumhydroxid-Katalyse (0,3 %) zugegeben und solange umgesetzt, bis kein Isocyanat mehr nachzuweisen war. Dann wurden 4737 Tle. des Umsetzungsproduktes b) und 3246 Tle. des Reaktionsproduktes a) (jeweils gelöst in Diäthylenglykoldimethyläther; Festkörper-Massenanteil ca. 70 %) zugegeben und bei 60 bis 90 °C zur Reaktion gebracht. Bei einer Aminzahl von ca. 32 mg/g wurde die Reaktion beendet. Das entstehende Produkt wurde unter vermindertem Druck auf einen Festkörper-Massenanteil von ca. 85 % eingeengt. Es wurde mit Ameisensäure neutralisiert (30 mmol pro 100 g des Festharzes) und mit deionisiertem Wasser in eine Dispersion mit einem Festkörper-Massenanteil von 40 % überführt.

Die Prüfung der Wirksamkeit der erfindungsgemäßen Anti-Krater-Mittel erfolgte analog dem Beispiel 4. Es wurden entsprechende Ergebnisse erhalten.

**Patentansprüche**

1. Verwendung von Homopolymeren oder Copolymeren des 2-Äthylhexylacrylats in Form von Lösungspolymerisaten als Zusatz in wäßrigen, kathodisch abscheidbaren Lacken zur Unterdrückung der Bildung von Oberflächenstörungen auf Lackfilmen, wobei der Massenanteil der Comonomeren in der zur Herstellung der Copolymeren eingesetzten Monomerenmischung 35 % nicht überschreitet, und wobei der Massenanteil des Homo- oder Copolymeren des 2-Äthylhexylacrylats in dem Festharz des Beschichtungsmittels 0,5 bis 5 % beträgt, und wobei die Comonomeren ausgewählt sind aus linearen, cyclischen oder verzweigten Alkylacrylaten mit 1 bis 18 Kohlenstoffatomen im Alkylrest und linearen, cyclischen oder verzweigten Hydroxyalkylacrylaten mit 2 bis 6 Kohlenstoffatomen im Hydroxyalkylrest.

2. Verfahren zur Herstellung von kathodisch abscheidbaren Beschichtungsmittel-Zusammensetzungen, die Homo- oder Copolymere des 2-Äthylhexylacrylats als Additiv zur Unterdrückung von Oberflächenstörungen enthalten, wobei das Homo- oder Copolymere dem Bindemittelharz vor dessen Emulgierung in Wasser zugesetzt wird.

3. Verfahren zur Herstellung von kathodisch abscheidbaren Beschichtungsmittel-Zusammensetzungen, die Homo- oder Copolymere des 2-Äthylhexylacrylats als Additiv zur Unterdrückung von Oberflächenstörungen enthalten, wobei das Homo- oder Copolymere in Gegenwart eines Emulgators in Wasser dispergiert wird, und diese Dispersion anschließend zu der wäßrigen KTL-Beschichtungsmittelzusammensetzung zugefügt wird.

4. Wäßrige Beschichtungsmittel-Zusammensetzungen enthaltend kathodisch abscheidbare Bindemittel und ein Homo- oder Copolymer des 2-Äthylhexylacrylats, wobei dessen Menge so gewählt wird, daß sein Massenanteil bezogen auf die Summe der Massen aller Festharze in der Beschichtungsmittelzusammensetzung 0,5 bis 5 % beträgt, und wobei der Massenanteil der Comonomeren in der zur Herstellung der Copolymeren des 2-Äthylhexylacrylats eingesetzten Monomerenmischung 35 % nicht überschreitet.

5. WäßrigeBeschichtungsmittel-Zusammensetzungen enthaltend kathodisch abscheidbare Bindemittel und ein Homo- oder Copolymer des 2-Äthylhexylacrylats, **dadurch gekennzeichnet, daß** das kathodisch abscheidbare Bindemittel ein Reaktionsprodukt aus einem Epoxyharz und einem Amin enthält.

6. Verfahren zur Beschichtung elektrisch leitfähiger Substrate, bei dem

   a) das Substrat in ein wäßriges Elektrotauchlackbad eingetaucht wird, das mindestens ein kathodisch abscheidbares Kunstharz enthält,
   b) eine elektrische Spannung angelegt wird, die größer als die Abscheidespannung dieses Kunstharzes ist, wobei das Substrat als Kathode geschaltet ist,
   c) durch das Fließen eines Gleichstroms ein Film des entladenen Kunstharzes auf dem Substrat abgeschieden wird,
   d) das Substrat aus dem Bad entfernt und gegebenenfalls abgespült wird, und
   e) der abgeschiedene Lackfilm auf dem Substrat eingebrannt wird,

   **dadurch gekennzeichnet, daß** das Elektrotauchlackbad ein Homo- oder Copolymer des 2-Äthylhexylacrylats enthält.

7. Verfahren nach Anspruch 6, **dadurch gekennzeichnet, daß** das Elektrotauchlackbad als kathodisch abscheidbares Kunstharz ein Epoxid-Amin-Addukt enthält.

8. Substrat, beschichtet nach dem Verfahren des Anspruchs 6.

## Claims

1. Use of homopolymers or copolymers of 2-ethylhexyl acrylate in the form of solution polymers as additives in aqueous, cathodically depositable coatings for the suppression of the formation of surface defects in coating films, wherein the fraction by weight of the comonomers in the monomer mixture used for the production of the copolymers does not exceed 35%, and wherein the fraction by weight of the homo- or copolymer of 2-ethylhexyl acrylate in the solid resin of the coating composition is 0.5 to 5%, and wherein the comonomers are selected from among linear, cyclic or branched alkyl acrylates with 1 to 18 carbon atoms in the alkyl residue and linear, cyclic or branched hydroxyalkyl acrylates with 2 to 6 carbon atoms in the hydroxyalkyl residue.

2. A process for the production of cathodically depositable coating compositions which contain homo- or copolymers of 2-ethylhexyl acrylate as an additive for the suppression of surface defects, wherein the homo- or copolymer is added to the binder resin before the latter is emulsified in water.

3. A process for the production of cathodically depositable coating compositions which contain homo- or copolymers of 2-ethylhexyl acrylate as an additive for the suppression of surface defects, wherein the homo- or copolymer is dispersed in water in the presence of an emulsifier, and this dispersion is then added to the aqueous CED coating composition.

4. Aqueous coating compositions containing cathodically depositable binders and a homo- or copolymer of 2-ethylhexyl acrylate, wherein the quantity thereof is selected such that its fraction by weight relative to the total masses of all the solid resins in the coating composition is 0.5 to 5%, and wherein the fraction by weight of the comonomer in the monomer mixture used for the production of the copolymer of 2-ethylhexyl acrylate does not exceed 35%.

5. Aqueous coating compositions containing cathodically depositable binders and a homo- or copolymer of 2-ethylhexyl acrylate, **characterised in that** the cathodically depositable binder contains a reaction product of an epoxy resin and an amine.

6. A process for coating electrically conductive substrates, in which

a) the substrate is dipped in an aqueous electro-dipcoating bath which contains at least one cathodically depositable synthetic resin,
b) an electrical voltage is applied which is greater than the deposition voltage of this synthetic resin, the substrate being connected as the cathode,
c) a film of the discharged synthetic resin is deposited onto the substrate by the passage of a direct current,
d) the substrate is removed from bath and optionally rinsed off, and
e) the deposited coating film is stoved on the substrate,

**characterised in that** the electro-dipcoating bath contains a homo- or copolymer of 2-ethylhexyl acrylate.

7. A process according to claim 6, **characterised in that** the electro-dipcoating bath contains an epoxy/amine adduct as the cathodically depositable synthetic resin.

8. A substrate coated according to the process of claim 6.


**Revendications**

1. Utilisation d'homopolymères ou de copolymères de l'acrylate de 2-éthylhexyle sous la forme de polymères en solution en tant qu'additif dans des vernis aqueux, pouvant être déposés par voie cathodique, en vue de la suppression de la formation de perturbations superficielles sur des films de vernis, la portion massique des comonomères dans le mélange de monomères utilisé pour la fabrication des copolymères, ne dépassant pas 35% et la portion massique de l'homopolymère ou du copolymère de l'acrylate de 2-éthylhexyle dans la résine solide de l'agent de revêtement étant de 0,5 à 5% et les comonomères étant sélectionnés parmi les acrylates d'alkyles linéaires, cycliques ou ramifiés, ayant de 1 à 18 atomes de carbone dans le résidu alkyle et des acrylates d'hydroxyalkyles linéaires, cycliques ou ramifiés, ayant de 2 à 6 atomes de carbone dans le résidu hydroxyalkyle.

2. Procédé en vue de la fabrication de compositions d'agents de revêtement pouvant être déposées par voie cathodique, qui contiennent des homopolymères ou des copolymères de l'acrylate de 2-éthylhexyle en tant qu'additif en vue de la suppression des perturbations superficielles, l'homopolymère ou le copolymère étant ajouté à la résine de liant avant son émulsification dans l'eau.

3. Procédé en vue de la fabrication de compositions d'agents de revêtement pouvant être déposées par voie cathodique, qui contiennent des homopolymères ou des copolymères de l'acrylate de 2-éthylhexyle en tant qu'additif en vue de la suppression des perturbations superficielles, l'homopolymère ou le copolymère étant dispersé dans l'eau en présence d'un émulsifiant et cette dispersion étant ensuite ajoutée à la composition d'agent de revêtement KTL (composition pour dépôt par voie cathodique) aqueux.

4. Compositions d'agents de revêtement aqueux contenant des liants pouvant être déposées par voie cathodique et un homopolymère ou un copolymère de l'acrylate de 2-éthylhexyle, sa quantité étant sélectionnée de telle sorte que sa portion massique, par rapport à la somme des masses de toutes les résines solides dans la composition d'agents de revêtement, étant de 0,5 à 5%, et la portion massique des comonomères dans le mélange de monomères utilisé pour la fabrication des copolymères de l'acrylate de 2-éthylhexyle ne dépassant pas 35%.

5. Compositions d'agents de revêtement aqueux contenant des liants pouvant être déposées par voie cathodique et un homopolymère ou un copolymère de l'acrylate de 2-éthylhexyle, **caractérisé en ce que** le liant capable de subir un dépôt par voie cathodique contient un produit de réaction provenant d'une résine époxyde et d'une amine.

6. Procédé en vue du revêtement de substrats électroconducteurs, lors duquel

a) le substrat est immergé dans un bain aqueux de trempage pour électrodéposition de vernis, qui contient au moins une résine synthétique, pouvant être déposée par voie cathodique,
b) une tension électrique est appliquée, laquelle est supérieure à la tension de dépôt de cette résine synthétique, le substrat étant branché en tant que cathode,
c) grâce à l'écoulement d'un courant continu, il y a dépôt d'un film de la résine synthétique déchargée sur le substrat,
d) le substrat est retiré du bain et, le cas échéant, rincé, et lors duquel
e) le film de vernis déposé est durci par cuisson sur le substrat,

**caractérisé en ce que** le bain de trempage pour électrodéposition de vernis contient un homopolymère ou un copolymère de l'acrylate de 2-éthylhexyle.

7. Procédé selon la revendication 6, **caractérisé en ce que** le bain de trempage pour électrodéposition de vernis contient, en tant que résine synthétique, pouvant être déposée par voie cathodique un produit d'addition époxyde-amine.

8. Substrat revêtu conformément au procédé de la revendication 6.